# EUROPEAN PATENT APPLICATION

(11) **EP 2 696 405 A1**
(43) Date of publication of application: **12.02.2014**
(21) Application number: 12767786.2
(22) Date of filing: 06.04.2012
(51) Int. Cl.: H01M 4/139, H01M 10/04, H01M 4/04

(54) **METHOD FOR PRODUCING AND DEVICE FOR PRODUCING BAGGED ELECTRODE**

(30) Priority: 07.04.2011 JP 2011085741; 23.03.2012 JP 2012067812
(71) Applicant: Nissan Motor Company, Limited, Kanagawa-ku Yokohama-shi Kanagawa 221-0023 (JP)
(72) Inventor: YUHARA, Hiroshi, Atsugi-shi Kanagawa 243-0123 (JP); YANAGI, Takahiro, Atsugi-shi Kanagawa 243-0123 (JP); YAMASHITA, Manabu, Kyoto-shi Kyoto 613-0916 (JP)
(74) Representative: Hoefer & Partner
(86) International application number: PCT/JP2012/059475
(87) International publication number: WO 2012/137904

(57) **Abstract**

A device for producing a packaged electrode of the present invention includes: a pair of cylindrical rotating bodies (310, 320) arranged with their respective outer peripheral surfaces (311) facing each other, and each configured to convey a separator (40) by rotating while holding the separator (40) on the outer peripheral surface; an electrode conveyance section (200) configured to convey an electrode (22) having a predetermined shape in a direction tangential to the cylindrical rotating bodies toward a gap between the pair of cylindrical rotating bodies; and a joining section (400) which joins the separators together, with the electrode sandwiched between the pair of separators conveyed by the pair of cylindrical rotating bodies. Also, the electrode is packaged with the separators by simultaneously delivering and laminating the pair of separators from the rotating cylindrical rotating bodies to both surfaces of the electrode being conveyed by the electrode conveyance section, and joining together the pair of separators delivered to both surfaces of the electrode by means of the joining section.

## Description

### TECHNICAL FIELD

The present invention relates to a device for producing a packaged electrode and a method for producing the same.

### BACKGROUND ART

Recently, a laminated type cell has been used in various types of batteries such as an automotive battery, a solar battery and a battery for electronic equipment. The laminated type cell is configured by forming a positive electrode, a negative electrode and a separator in sheet form, and alternately stacking the positive electrode, the separator, the negative electrode and the separator in sequence. Incidentally, the positive and negative electrodes will hereinafter be sometimes called electrodes.

Various devices have been proposed as a device for use in manufacture of such a laminated type cell, and examples of the device include a device described in Patent Literature 1.

In the device described in Patent Literature 1, separators are first held by suction respectively on a cradle and a holding plate, which are arranged vertically facing each other, under a condition where movements of the cradle and the holding plate in a conveyance direction are being stopped. Then, a positive electrode is placed on the separator attached by suction to the lower cradle. After that, the upper holding plate is moved down to put the separator attached by suction to the holding plate on the positive electrode. In this position, the separators overlapping each other on the periphery of the positive electrode are bonded together by thermal adhesion in edge-to-edge relation, and thereby, a packaged positive electrode is fabricated in which the positive electrode is sandwiched between the separators in the form of a bag. Then, the packaged positive electrode is conveyed remaining pinched between the cradle and the holding plate, and thereafter, the packaged positive electrode is removed from between the cradle and the holding plate, and the packaged positive electrode is alternately stacked with a negative electrode. Thereby, a cell element is fabricated in which the positive electrode, the separator, the negative electrode and the separator are alternately stacked in sequence.

### CITATION LIST

### PATENT LITERATURE

Patent Literature 1: Japanese Patent Application Publication No. 2007-329111

### SUMMARY OF INVENTION

### TECHNICAL PROBLEM

However, the device described in Patent Literature 1 fabricates the packaged positive electrode (or a packaged electrode) by placing the positive electrode on the separator attached by suction to the cradle in the stopped position, and then moving the holding plate down to put the separator attached by suction to the holding plate on the positive electrode. Therefore, two separators are laid on the electrode at different times, which in turn leads to the problem of involving a long production time.

The present invention has been made in view of the foregoing problem inherent in the prior art. Therefore, an object of the present invention is to provide a device for producing a packaged electrode and a method for producing the same, which are capable of fabricating the packaged electrode at high speed and thereby reducing a production time for a cell.

### SOLUTION TO PROBLEM

A device for producing a packaged electrode according to a first aspect of the present invention includes: a pair of cylindrical rotating bodies arranged with their respective outer peripheral surfaces facing each other, and each configured to convey a separator by rotating while holding the separator on the outer peripheral surface; an electrode conveyance section configured to convey an electrode having a predetermined shape in a direction tangential to the cylindrical rotating bodies toward a gap between the pair of cylindrical rotating bodies; and a joining section configured to join the separators together, with the electrode sandwiched between the pair of separators conveyed by the pair of cylindrical rotating bodies. Also, the electrode is packaged with the separators by simultaneously delivering and laminating the pair of separators from the rotating cylindrical rotating bodies to both surfaces of the electrode being conveyed by the electrode conveyance section, and joining together the pair of separators delivered to both surfaces of the electrode by means of the joining section.

A method for producing a packaged electrode according to a second aspect of the present invention includes: conveying separators by rotating cylindrical rotating bodies, respectively, while holding the separator on each of outer peripheral surfaces of the pair of cylindrical rotating bodies arranged with their respective outer peripheral surfaces facing each other; and conveying an electrode having a predetermined shape in a direction tangential to the cylindrical rotating bodies toward a gap between the pair of cylindrical rotating bodies. Further, the producing method includes: simultaneously delivering and laminating the pair of separators from the rotating cylindrical rotating bodies to both surfaces of the electrode being conveyed to the gap between the pair of cylindrical rotating bodies; and packaging the electrode with the separators by joining together the pair of separators delivered to both surfaces of the electrode.

### BRIEF DESCRIPTION OF DRAWINGS

[Fig. 1] Fig. 1 is a perspective view representing an external appearance of a lithium ion secondary cell.
[Fig. 2] Fig. 2 is an exploded perspective view of the lithium ion secondary cell.
[Fig. 3] Fig. 3 is a plan view illustrating a packaged positive electrode and a negative electrode.
[Fig. 4] Fig. 4 is a plan view illustrating a state in which the negative electrode is laid on the packaged positive electrode.
[Fig. 5] Fig. 5 is a schematic perspective view illustrating a device for producing a packaged electrode.
[Fig. 6] Fig. 6 is a block diagram illustrating an electrical configuration of the device for producing the packaged electrode.
[Fig. 7] Fig. 7 is a side view illustrating an electrode conveyance section of the device for producing the packaged electrode.
[Fig. 8] Fig. 8 is a front view illustrating the electrode conveyance section of the device for producing the packaged electrode.
[Fig. 9] Fig. 9 is a plan view illustrating the electrode conveyance section of the device for producing the packaged electrode.
[Fig. 10] Fig. 10 is a schematic sectional view illustrating a rotating conveyance section of the device for producing the packaged electrode.
[Fig. 11] Fig. 11 is a first explanatory view illustrating a laminating process by the device for producing the packaged electrode.
[Fig. 12] Fig. 12 is a second explanatory view illustrating the laminating process by the device for producing the packaged electrode.
[Fig. 13] Fig. 13 is a third explanatory view illustrating the laminating process by the device for producing the packaged electrode.
[Fig. 14] Fig. 14 is a fourth explanatory view illustrating the laminating process by the device for producing the packaged electrode.
[Fig. 15] Fig. 15 is a fifth explanatory view illustrating the laminating process by the device for producing the packaged electrode.
[Fig. 16] Fig. 16 is a sixth explanatory view illustrating the laminating process by the device for producing the packaged electrode.
[Fig. 17] Fig. 17 is a seventh explanatory view illustrating the laminating process by the device for producing the packaged electrode.
[Fig. 18] Fig. 18 is an eighth explanatory view illustrating the laminating process by the device for producing the packaged electrode.
[Fig. 19] Fig. 19 is a chart illustrating operation of the rotating conveyance section.
[Fig. 20] Fig. 20 is a schematic sectional view illustrating another example of the device for producing the packaged electrode.
[Fig. 21] Fig. 21 is a schematic sectional view illustrating still another example of the device for producing the packaged electrode.

### DESCRIPTION OF EMBODIMENTS

An embodiment of the present invention will be described below with reference to the accompanying drawings. Incidentally, dimensional ratios in the drawings are exaggerated for convenience of explanation, and some ratios are different from actual ratios.

The present invention relates to a device for producing a packaged electrode and a method for producing the same, which are intended for assembling an electric-power generation element of a cell, as applied to part of a manufacturing process for the cell. Description will be given with regard to a structure of the cell, prior to description of a device for producing a packaged electrode according to one embodiment of the present invention.

### [Cell]

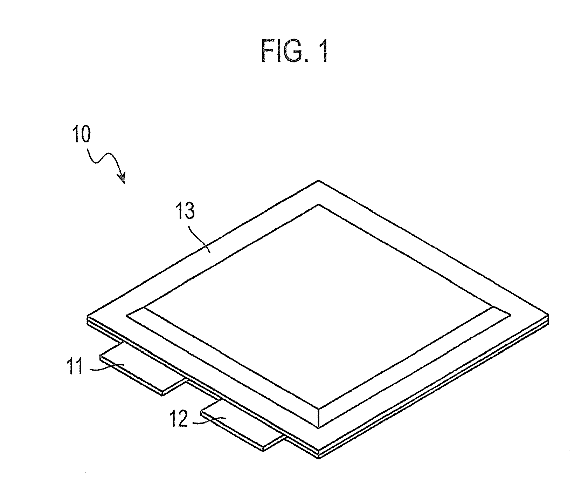

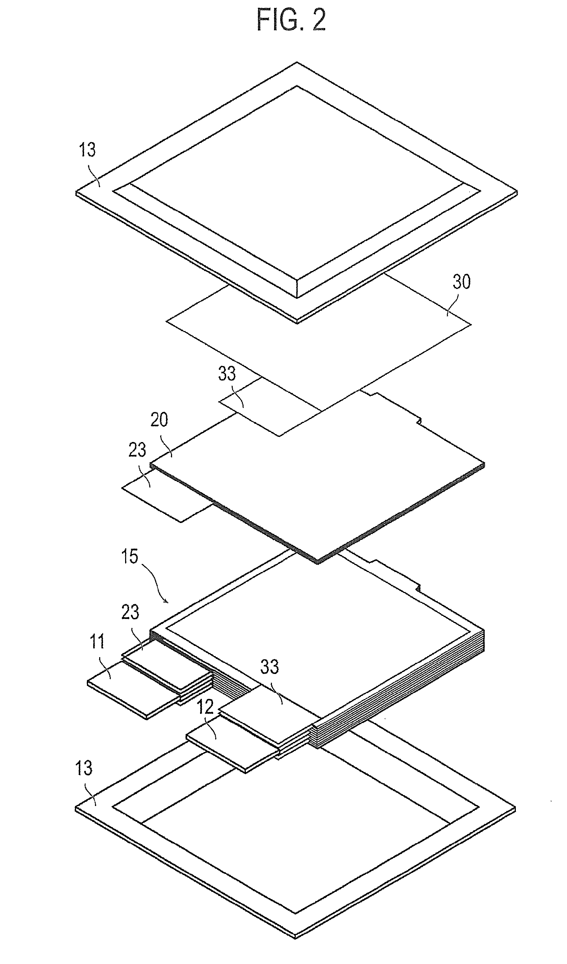

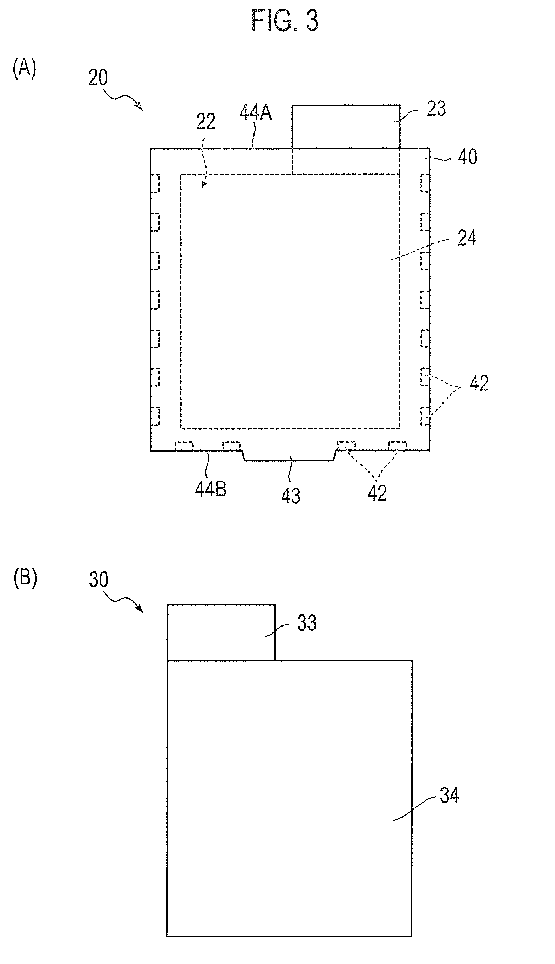

Firstly, description will be given with reference to Fig. 1 with regard to a lithium ion secondary cell (or a laminated type cell) formed by the producing device. Fig. 1 is a perspective view representing an external appearance of the lithium ion secondary cell, Fig. 2 is an exploded perspective view of the lithium ion secondary cell, and Fig. 3 is a plan view of a packaged positive electrode and a negative electrode.

As illustrated in Fig. 1, a lithium ion secondary cell 10 has a flat rectangular shape, and is provided with a positive electrode lead 11 and a negative electrode lead 12, which are drawn out from one and the same end portion of a sheathing material 13. An electric-power generation element (or a cell element) 15 in which a charging or discharging reaction proceeds is accommodated within the sheathing material 13. As illustrated in Fig. 2, the electric-power generation element 15 is formed by alternately stacking a packaged positive electrode 20 and a negative electrode 30.

As illustrated in Part (A) of Fig. 3, the packaged positive electrode 20 is configured so that a positive electrode 22 in a rectangular shape is sandwiched between separators 40 in a rectangular shape. The positive electrode 22 has positive electrode active material layers formed on both surfaces of a positive electrode collector (or current collecting foil) in the form of an extra-thin sheet. The two separators 40 are formed in the shape of a bag by being joined together in their end portions by joining parts 42. The separators 40 each have a side 44A formed in a straight line, from which a positive electrode tab 23 of the positive electrode 22 is drawn out, and are each further provided with an engagement portion 43 partially protruding, which is formed on a side 44B opposite to the side 44A. The engagement portion 43 is engaged with the sheathing material 13 internal to the sheathing material 13 thereby to serve to fix the electric-power generation element 15 to the sheathing material 13. The positive electrode 22 has a positive electrode active material layer 24 formed in a portion other than the positive electrode tab 23.

As illustrated in Part (B) of Fig. 3, the negative electrode 30 is formed in a rectangular shape, and has negative electrode active material layers 34 formed on both surfaces of a negative electrode collector (or current collecting foil) in the form of an extra-thin sheet. The negative electrode 30 has the negative electrode active material layers 34 formed in portions other than a negative electrode tab 33.

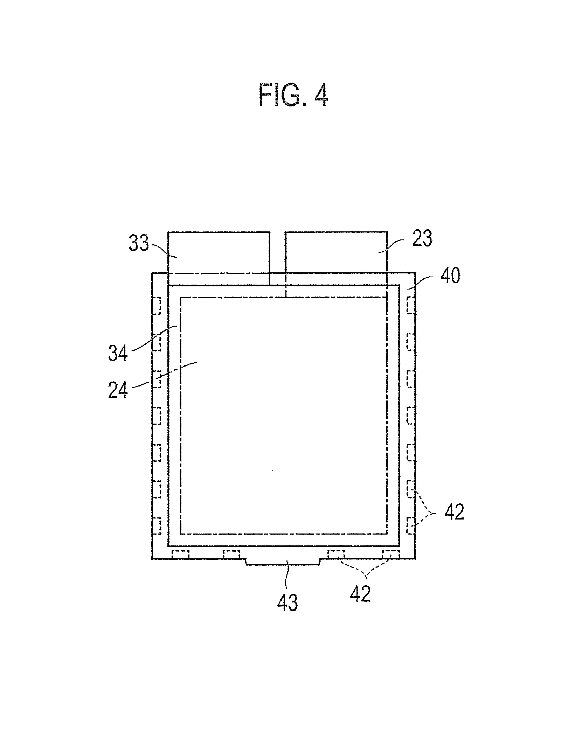

Laying the negative electrode 30 on the packaged positive electrode 20 results in a configuration as illustrated in Fig. 4. As illustrated in Fig. 4, the negative electrode active material layer 34 is formed in a size larger than the positive electrode active material layer 24 of the positive electrode 22, as seen in a plan view.

Incidentally, a method in itself of manufacturing the lithium ion secondary cell by alternately stacking the packaged positive electrode 20 and the negative electrode 30 is a general method of manufacturing a lithium secondary cell, and therefore, detailed description of the method will be omitted.

### [Producing Device]

Next, description will be given with reference to the drawings with regard to a device for producing a packaged electrode according to one embodiment of the present invention.

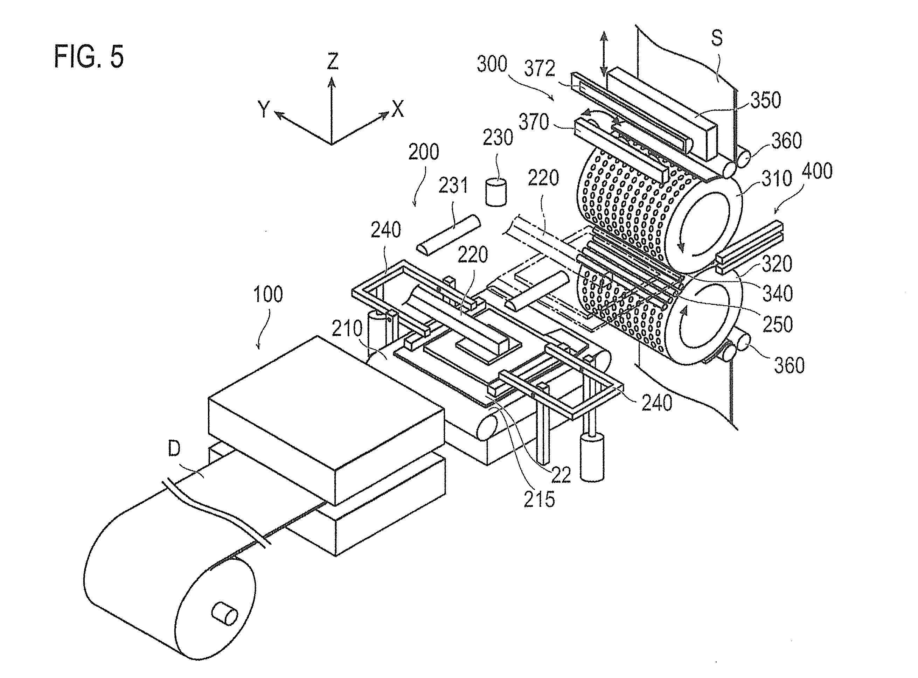

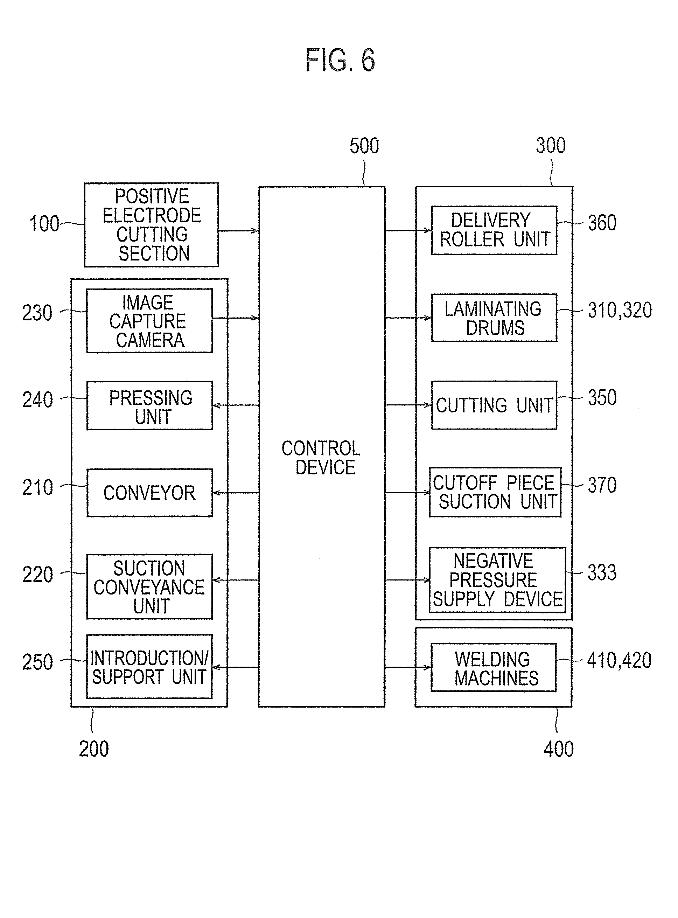

As illustrated in Figs. 5 and 6, the producing device includes a positive electrode cutting section 100 for cutting out the positive electrode 22 from a sheet material D for positive electrode, and an electrode conveyance section 200 for conveying the cut-out positive electrode 22. Further, the laminating device includes a rotating conveyance section 300 provided on the downstream side of the electrode conveyance section 200 in a conveyance direction, a welding section 400 (or a joining section) provided on both sides of the rotating conveyance section 300, and a control device 500 (or a synchronization device) for performing centralized control on the overall device. In the embodiment, a direction in which the positive electrode 22 is conveyed is described as a conveyance direction X, a direction perpendicular to a surface of the positive electrode 22 is described as a vertical direction Z, and a direction orthogonal to the vertical direction Z and the conveyance direction X is described as a width direction Y.

The positive electrode cutting section 100 cuts out the positive electrode 22 (or a sheet member) having a predetermined shape, by cutting the sheet material D for positive electrode wound in the form of a roll into the predetermined shape by die cutting or the like. Here, the cut-out positive electrode 22 has a rectangular shape and has the positive electrode tab 23.

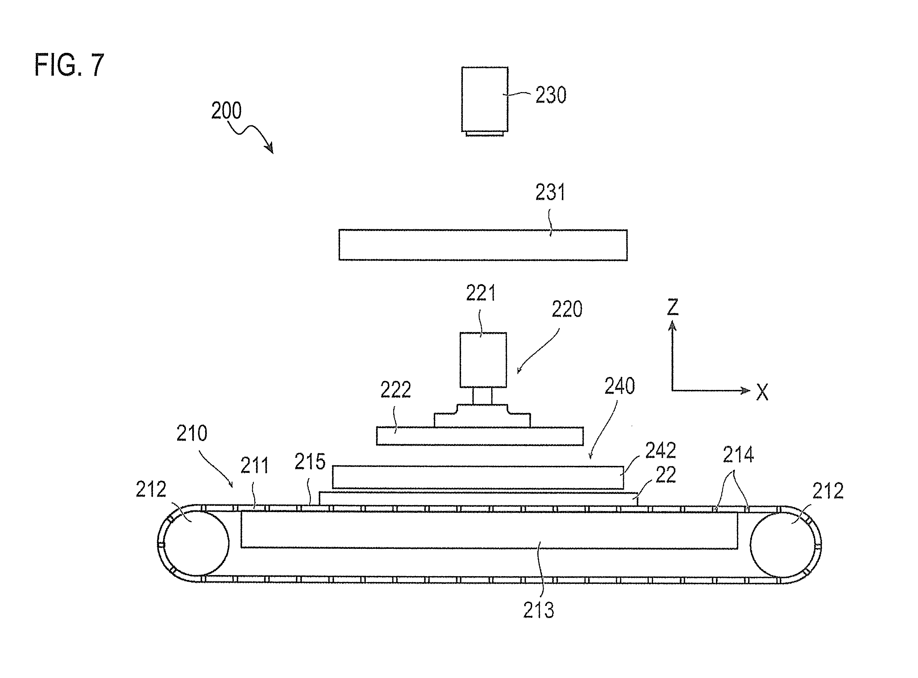

As illustrated in Figs. 7 to 9, the electrode conveyance section 200 includes a conveyor 210, and a suction conveyance unit 220. The conveyor 210 conveys the positive electrode 22 cut out by the positive electrode cutting section 100. The suction conveyance unit 220 adheres by suction to the positive electrode 22 on the conveyor 210 and conveys the positive electrode 22 to the rotating conveyance section 300 (or a separator conveyance section). An image capture camera 230 (or a position detector) and a lighting unit 231 are provided above the conveyor 210.

The conveyor 210 includes a suction belt 211 formed in an endless form and having air permeability, and two rotating shafts 212 arranged in side-by-side relation in the conveyance direction and configured to rotatably hold the suction belt 211. Further, the conveyor 210 includes a negative pressure generator 213 arranged inside the suction belt 211.

The suction belt 211 has plural air suction holes 214 formed therein. Then, air is sucked in through the air suction holes 214 by the negative pressure generator 213, and thereby, the positive electrode 22 which is thin and thus difficult to convey can be conveyed by being held on a flat placement surface 215 (or a reference surface) on the conveyor 210. The placement surface 215 of the suction belt 211 has color tone which makes it easy for the image capture camera 230 to recognize a boundary between the placement surface 215 and the positive electrode 22, and, in the embodiment, the placement surface 215 has a white color.

Incidentally, in the embodiment, the conveyor 210 is applied as being provided with the flat placement surface 215 on which the positive electrode 22 can be placed substantially in a horizontal position. However, other devices may be used, provided that they are provided with a flat placement surface.

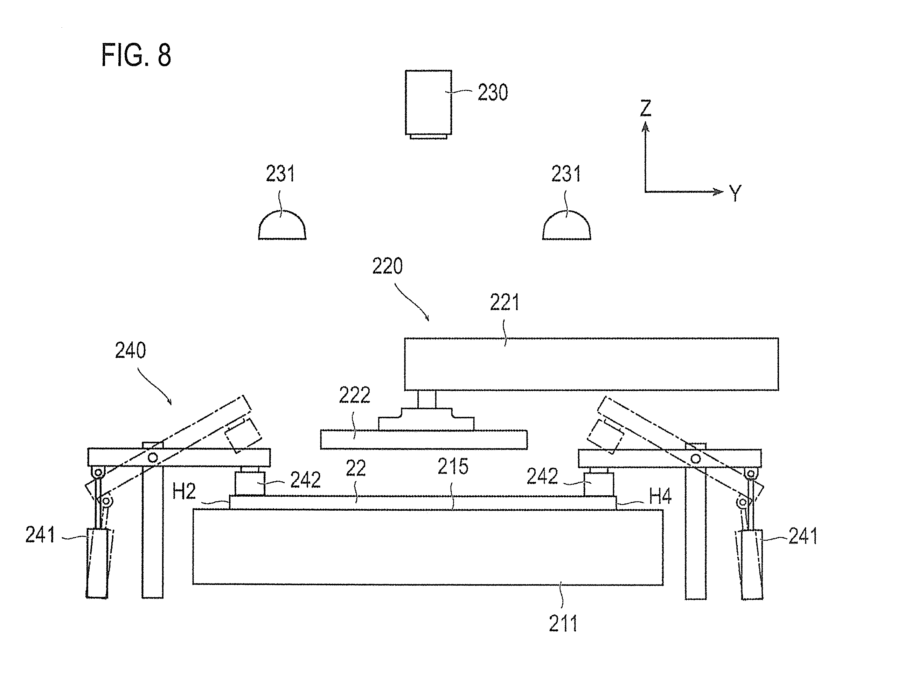

As illustrated in Figs. 5 and 8, pressing units 240 which hold the positive electrode 22 by pressing side portions of the positive electrode 22 on the suction belt 211 are provided on both sides of the conveyor 210. The pressing units 240 each include a clamper 242 which is brought into close proximity with or moved away from the placement surface 215 (or the reference surface) on the suction belt 211 by each of actuators 241 controlled by the control device 500. The clampers 242 correct distortion of the positive electrode 22 by pressing the positive electrode 22 against the placement surface 215. The positive electrode 22 cut out from the sheet material D wound in the form of a roll, in particular, is prone to remain curly and thus curl up. Also, the positive electrode 22, the negative electrode 30 and the separator 40 are each made of a material in the form of very thin foil and hence are very prone to become deformed in the case of a large-sized battery such as an automotive battery, in particular. Incidentally, although the suction belt 211 holds, by suction, a member in contact with the placement surface 215, the suction belt 211 does not typically have a suction force large enough to attract a part which is far away from the placement surface 215. Therefore, the clampers 242 press the positive electrode 22 against the placement surface 215 thereby to correct deformation of the positive electrode 22. Thus, the image capture camera 230 can grasp the position of the positive electrode 22 with high accuracy, and besides, a position where the suction conveyance unit 220 adheres by suction can also be set with high accuracy. As a result, a later process improves in fabrication accuracy.

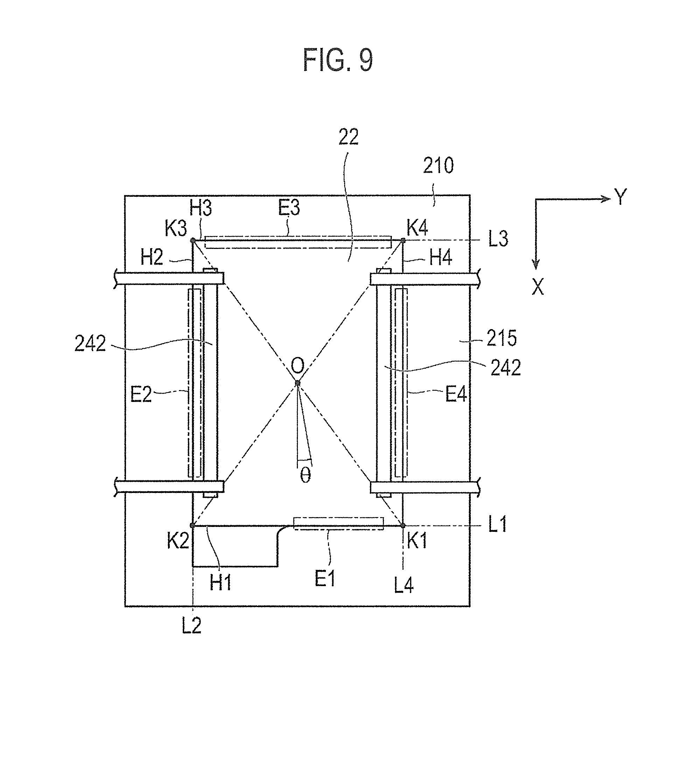

Then, as illustrated in Fig. 9, the clampers 242 are formed so as to be capable of pressing parts of long dimension along two side edges H2, H4 (or edges), respectively, of the positive electrode 22 on the suction belt 211 along the conveyance direction. Thus, a position on the positive electrode 22 where the suction conveyance unit 220 adheres by suction can be ensured between the clampers 242. Further, the clampers 242 can press the positive electrode 22 at a position inward of edges of four side edges H1 to H4 of the positive electrode 22, or equivalently, at a position toward the center of the positive electrode 22, so that the image capture camera 230 can capture an image of the four side edges H1 to H4 (or the edges) of the positive electrode 22. Incidentally, the clampers 242 are constructed of transparent members so that the pressed positive electrode 22 can be seen through the clampers 242 in order for its image to be captured. An acrylic resin or glass or the like, for example, may be applied as the transparent member. However, a material for the clampers 242 is not particularly limited but may be set as appropriate according to the frequency of the lighting unit 231 or image capture characteristics of the image capture camera 230.

The suction conveyance unit 220 includes a movable device body 221 connected to a drive device (unillustrated), and a suction head 222 provided in a lower portion of the device body 221 and connected to a source of supply of negative pressure (unillustrated) to exert a suction force. The suction head 222 is movable in three dimensions in the vertical direction Z, the conveyance direction X and the width direction Y according to operation of the drive device, and is further rotatable along a horizontal plane.

The image capture camera 230 disposed above the conveyor 210 captures an image of the positive electrode 22 conveyed by the conveyor 210 under light irradiation by the lighting unit 231, after the positive electrode 22 has been pressed and held by the clampers 242. The image capture camera 230 transmits to the control device 500 a signal based on an image of the positive electrode 22 captured when the positive electrode 22 is conveyed to and then stopped at a predetermined position. Upon receipt of a predetermined signal, the control device 500 calculates position information as the position or state of the positive electrode 22 from the signal, and controls movement of the drive device for the suction conveyance unit 220, based on a calculated result of the position information. Then, the suction conveyance unit 220 properly corrects the position or orientation of the positive electrode 22, and conveys the positive electrode 22 to a gap 340 (see Fig. 5) in the rotating conveyance section 300 to be described later.

Specifically, the control device 500 stops the conveyor 210 at a predetermined position, and detects edges of side edge areas E1 to E4 corresponding to four sides of the positive electrode 22 illustrated in Fig. 9, from an image captured by the image capture camera 230. The edges can be detected from a difference in color tone between the suction belt 211 and the positive electrode 22. The control device 500 calculates approximate straight lines L1 to L4 of the four sides from a detected result by using a method of least squares or the like. Then, the control device 500 calculates four corner portions K1 to K4 as points of intersection of the approximate straight lines L1 to L4 of the four sides and calculates an average value of the four corner portions K1 to K4 thereby to set the average value as coordinates of an electrode center point O. Incidentally, the coordinates of the electrode center point O are represented as coordinates in the conveyance direction X and the width direction Y. Then, the control device 500 calculates an angle θ of inclination of the positive electrode 22 in the horizontal plane (or a reference plane) from an average value of either one or both of the approximate straight lines L2, L4 of the two side edges H2, H4 of the positive electrode 22 along the conveyance direction. After this, the control device 500 calculates the amount of correction of the position and inclination of the positive electrode 22 with respect to its normal position in the horizontal plane from the coordinates of the electrode center point O and the angle θ of inclination. Then, the control device 500 controls the drive device for the suction conveyance unit 220 (or a position correction unit) so as to correct the amount of correction. Further, the suction conveyance unit 220 conveys the positive electrode 22 to the gap 340 in the rotating conveyance section 300, while correcting the position of the positive electrode 22.

Incidentally, in the embodiment, the image capture camera 230 recognizes the position or state of the positive electrode 22. However, other sensors may be used; a contact sensor which detects the extreme end of the positive electrode 22, or the like, for example, may be used to recognize the position of the positive electrode 22.

The suction conveyance unit 220 moves vertically downward and holds the positive electrode 22 by the suction head 222 adhering to the positive electrode 22 by suction, under a condition where the positive electrode 22 is conveyed to a predetermined position on the conveyor 210 and the clampers 242 press the side portions of the positive electrode 22 to correct the shape of the positive electrode 22. Then, restraint of the positive electrode 22 by the clampers 242 is released, and thereafter, the suction conveyance unit 220 moves up while maintaining the positive electrode 22 substantially in a horizontal position. After that, the suction conveyance unit 220 properly corrects the position and orientation of the positive electrode 22 according to the calculated amount of correction, and conveys the positive electrode 22 to the gap 340 in the rotating conveyance section 300.

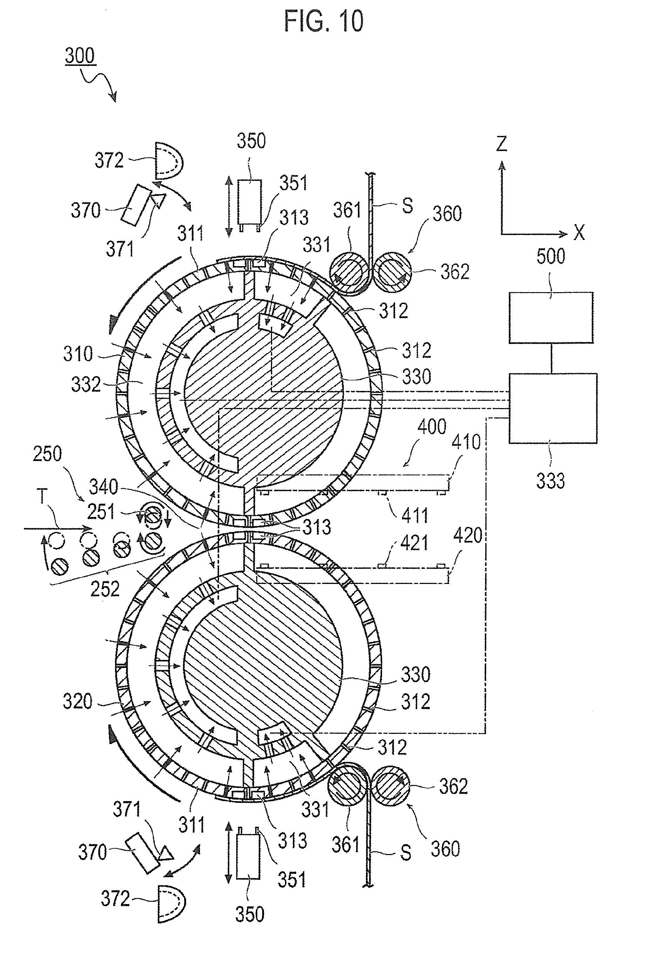

As illustrated in Fig. 10, an introduction/support unit 250 disposed with the gap 340 in between in the vertical direction and configured to assist the introduction of the positive electrode 22 into the rotating conveyance section 300 is provided in the vicinity of the gap 340 in the rotating conveyance section 300. The introduction/support unit 250 is formed of plural roller groups, and supports the positive electrode 22 conveyed by the suction conveyance unit 220 and also delivers the positive electrode 22 to the gap 340 in the rotating conveyance section 300.

The introduction/support unit 250 includes an upper introduction/support unit 251 formed of one roller, and a lower introduction/support unit 252 formed of plural rollers. The upper introduction/support unit 251 is movable in the vertical direction Z, and can move down from its upward-moved or "open" position to "closed" position in which the positive electrode 22 is pinched between the upper introduction/support unit 251 and a roller of the lower introduction/support unit 252 on the extreme downstream side in the conveyance direction. Further, the upper introduction/support unit 251 can be rotatably driven to deliver the pinched positive electrode 22 to the gap 340.

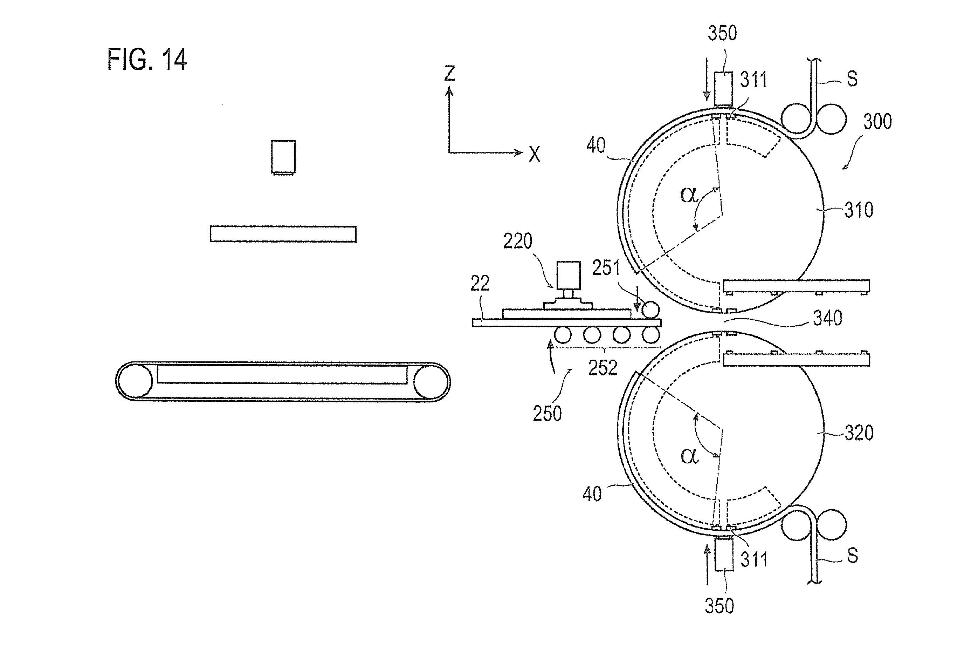

When the positive electrode 22 is delivered from the suction conveyance unit 220 to the lower introduction/support unit 252, the lower introduction/support unit 252 moves up from its "open" position in which a roller thereof on the upstream side in the conveyance direction is in an obliquely downward moved position, to its substantially horizontal or "closed" position. Thereby, as illustrated in Fig. 14, the lower introduction/support unit 252 supports the positive electrode 22 in a conveyable manner. The roller of the lower introduction/support unit 252 on the extreme downstream side in the conveyance direction, paired with the roller of the upper introduction/support unit 251, can be rotatably driven. Thus, the roller on the extreme downstream side can deliver the pinched positive electrode 22 to the gap 340 by rotating with the positive electrode 22 pinched between the roller on the extreme downstream side and the upper introduction/support unit 251.

Therefore, when the positive electrode 22 is conveyed by the suction conveyance unit 220 and comes in, the upper introduction/support unit 251 is moved down to pinch the extreme end of the positive electrode 22 between the upper introduction/support unit 251 and the lower introduction/support unit 252. Further, the rollers of the lower introduction/support unit 252 are moved up to a substantially horizontal position to support the positive electrode 22 at its underside. After this, the positive electrode 22 is released from the suction head 222 of the suction conveyance unit 220, and the introduction/support unit 250 rotates to sequentially deliver the positive electrode 22 into the gap 340 in the rotating conveyance section 300.

The rotating conveyance section 300 (or the separator conveyance section) laminates the separators 40 to the positive electrode 22 conveyed by the suction conveyance unit 220, while cutting out the separators 40 from a separator material S in the form of sheet. The rotating conveyance section 300 includes a pair of upper and lower laminating drums 310, 320 (or cylindrical rotating bodies) formed in a cylindrical shape.

The pair of upper and lower laminating drums 310, 320 have the axis of rotation orthogonal to the conveyance direction X. Further, the laminating drums 310, 320 are arranged parallel to each other with their respective outer peripheral surfaces 311 facing each other with the predetermined gap 340 in between and also have a symmetric structure with respect to the horizontal plane.

Each of the laminating drums 310, 320 is provided with a suction unit capable of adhering to the separator 40 by suction, which is formed on the outer peripheral surface 311. Further, the laminating drums 310, 320 each internally have an inside structure unit 330 non-rotatably disposed. The width of the laminating drums 310, 320 (or the length thereof in a direction of the axis of rotation) is such that both edges of the separator material S extend beyond both ends of the laminating drums 310, 320.

The upper and lower laminating drums 310, 320 are arranged with the gap 340 in between. Also, in the gap 340, the laminating drums 310, 320 rotate downstream in the conveyance direction X. Specifically, the laminating drum 310 located at an upper position rotates in a left-handed direction of the sheet as seen in Fig. 10, thereby to convey the separator 40 attached by suction to the outer peripheral surface 311 to the gap 340. Also, the laminating drum 320 located at a lower position rotates in a right-handed direction of the sheet as seen in Fig. 10, thereby to convey the separator 40 attached by suction to the outer peripheral surface 311 to the gap 340. Incidentally, the upper and lower laminating drums 310, 320 are driven by a drive motor (unillustrated), the revolution of which is under control of the control device 500.

The laminating drums 310, 320 have innumerable vent holes 312 formed in the outer peripheral surfaces 311. Further, the outer peripheral surfaces 311 are each provided with recess portions 313 (or receiving portions) capable of entry of a separator cutter 351 (or a cutting blade) provided in a cutting unit 350 to be described later, which are formed partially in a circumferential direction. The recess portions 313 are formed at two locations at 180° intervals circumferentially of each of the laminating drums 310, 320. Incidentally, the disposition of the recess portions 313 at the two locations in the circumferential direction is for the purpose of cutting out two separators 40 each time the laminating drums 310, 320 make one rotation. However, the number of recess portions 313 in the circumferential direction may be changed according to the number of separators 40 cut out in one rotation of the laminating drums 310, 320.

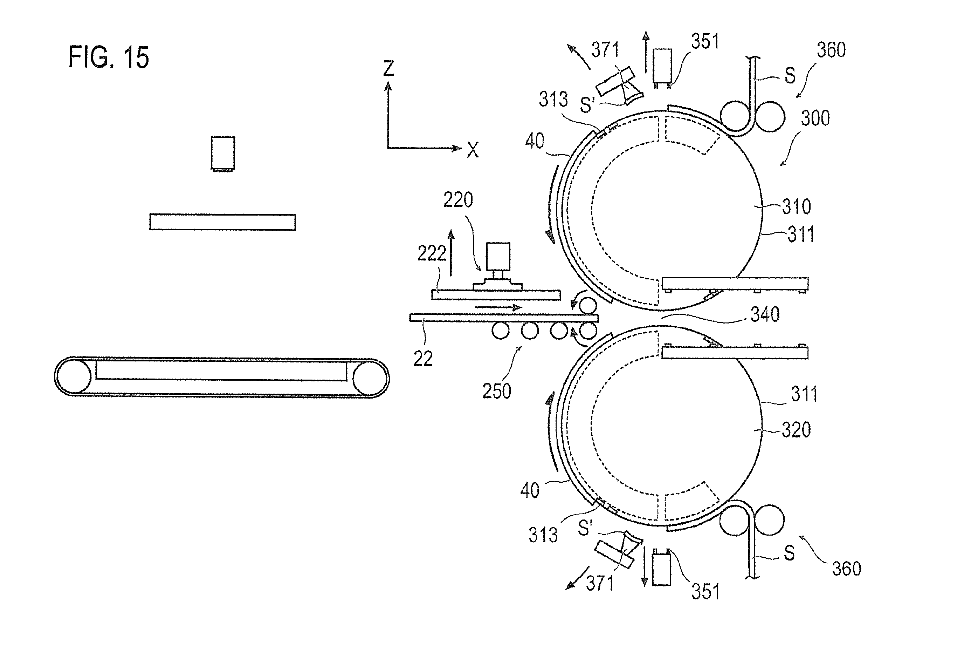

Also, a delivery roller unit 360 (or a lock mechanism) which feeds or restrains the separator material S in the form of sheet is provided in close proximity to the outer peripheral surface 311 about the periphery of each of the laminating drums 310, 320. Further, the cutting unit 350 which cuts the separator material S on the outer peripheral surface 311 of each of the laminating drums 310, 320 is provided. Also, a cutoff piece suction unit 370 for collecting an unnecessary cutoff piece S' produced by cutting by each of the cutting units 350 is provided as illustrated in Fig. 15.

Specifically, the small-sized delivery roller units 360 formed in a cylindrical shape are disposed obliquely above and obliquely below the rotating conveyance section 300, respectively, on the downstream side in the conveyance direction.

The delivery roller units 360 are each provided with a pair of delivery rollers 361, 362, and the pairs of delivery rollers 361, 362 are disposed obliquely above and obliquely below the rotating conveyance section 300, respectively, on the downstream side in the conveyance direction. The delivery rollers 361, 362 are formed in a cylindrical shape and are arranged with a predetermined gap in between. The delivery roller units 360 each pinch a continuous sheet of the separator material S conveyed from a separator roll (unillustrated) in the gap. Then, the delivery roller units 360 each rotate to deliver the separator material S to the rotating conveyance section 300, or stop to stop delivering and restrain the separator material S. The delivery rollers 361, 362 are controlled by the control device 500 so as to deliver the separator material S to the rotating conveyance section 300 at a predetermined time.

The cutting units 350 are provided with the separator cutters 351, respectively, which are disposed above and below the rotating conveyance section 300, respectively. The separator cutters 351 are each a heat cutter which melts the separator material S attached by suction to the outer peripheral surface 311 of each of the laminating drums 310, 320 thereby to cut out the separator material S into a predetermined shape. Specifically, first, the separators 40 are conveyed while being attached by suction to the outer peripheral surfaces 311 of the laminating drums 310, 320, respectively. At this time, when the recess portions 313 of the laminating drums 310, 320 move to positions facing the separator cutters 351, the separator cutters 351 receive a command from the control device 500 to move into the recess portions 313 of the laminating drums 310, 320. Thereby, the separator cutters 351 each melt the separator 40 to cut out the separator 40 into a predetermined shape as illustrated in Part (A) of Fig. 3. When the separators 40 are continuously cut out from the separator material S, a rear end of the separator 40 cut out earlier is set as the side 44B on which the engagement portion 43 is formed, and a front end of the separator 40 cut out next is set as the straight-line side 44A. Thus, the two sides 44A, 44B whose shapes do not coincide with each other are simultaneously cut out by the cutting units 350, which in turn leads to the residual cutoff pieces S'.

As illustrated in Fig. 15, the cutoff piece suction units 370 each include a suction head 371 for cutter which exerts a suction force. Then, at the time at which the separator cutters 351 exit and are withdrawn from the recess portions 313 after cutting the separator materials S, the suction heads 371 for cutter move into close proximity to cut parts. After that, the suction heads 371 for cutter hold, by suction, the residual cutoff pieces S' of the separators 40 cut out by the separator cutters 351. Then, the suction heads 371 for cutter are moved away from the outer peripheral surfaces 311 of the laminating drums 310, 320, while holding the cutoff pieces S' by suction. After this, the suction heads 371 for cutter stop sucking to release their hold on the cutoff pieces S', and the cutoff pieces S' are collected by being sucked in through suction openings 372 separately provided at positions far away from the outer peripheral surfaces 311 of the laminating drums 310, 320.

Here, when an attempt is made to collect the cutoff pieces S' only through the suction openings 372 without the use of the suction heads 371 for cutter, the cutoff pieces S', in process of being sucked in, may come in contact with the separators 40 or the separator materials S remaining on the outer peripheral surfaces 311. However, the suction heads 371 for cutter are used to temporarily adhere by suction to the cutoff pieces S' and move the cutoff pieces S' away from the outer peripheral surfaces 311 and then the suction openings 372 are used to collect the cutoff pieces S' therethrough, thereby enabling collecting of the cutoff pieces S', while suppressing damage to the separators 40 or the separator materials S caused by the cutoff pieces S'.

As illustrated in Fig. 10, the inside structure unit 330 is provided internal to each of the laminating drums 310, 320. The inside structure unit 330 includes a first negative pressure chamber 331 capable of regulating the intensity of a negative pressure according to process during operation of the device, and a second negative pressure chamber 332 in which a negative pressure is kept substantially constant during operation of the device, and the first negative pressure chamber 331 and the second negative pressure chamber 332 are non-rotatably formed. The first negative pressure chamber 331 and the second negative pressure chamber 332 are connected to a negative pressure supply device 333 provided with a pressure regulating valve, and their internal pressures can be regulated by the control device 500 controlling the negative pressure supply device 333.

The first negative pressure chamber 331 and the second negative pressure chamber 332 are isolated from the outside by an inner peripheral surface of each of the laminating drums 310, 320. Therefore, negative pressure regions are non-rotatably formed on the outer peripheral surfaces 311 of the laminating drums 310, 320 through the vent holes 312 formed in the laminating drums 310, 320. The regions do not rotate even when the laminating drums 310, 320 rotate. The first negative pressure chamber 331 is formed in a range of from a position corresponding to the delivery roller unit 360 to a position corresponding to the separator cutter 351 in a direction of rotation of the laminating drums 310, 320. The second negative pressure chamber 332 is formed in a range of approximately 180° from the position corresponding to the separator cutter 351 to a position corresponding to the gap 340 in the direction of rotation of the laminating drums 310, 320.

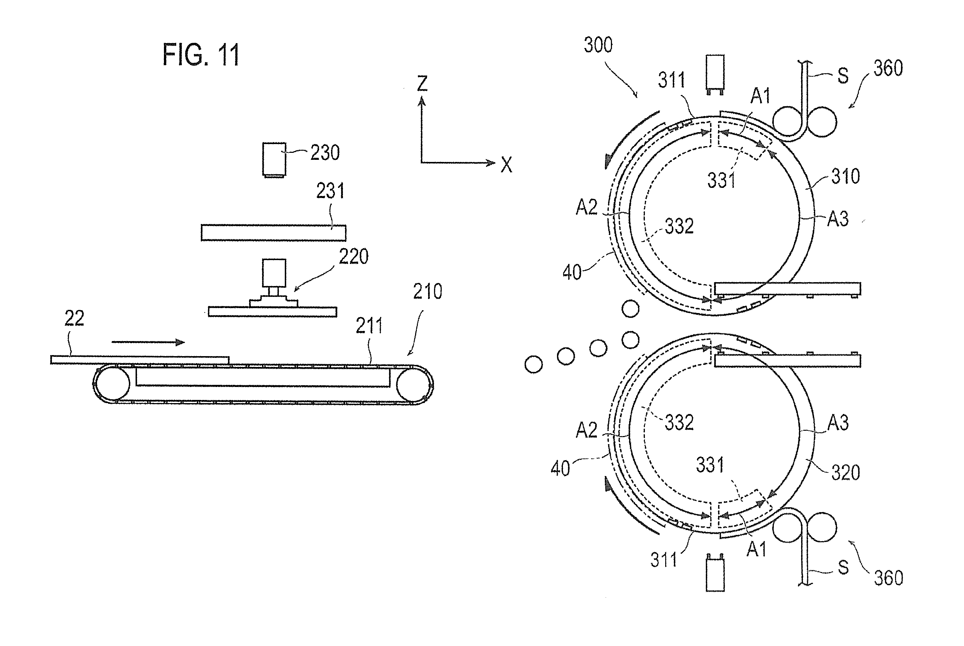

As illustrated in Fig. 11, therefore, a sliding region A1 (or a suction force adjustment region) where a negative pressure is regulated and changed is formed at a position corresponding to the first negative pressure chamber 331 on the outer peripheral surface 311 of each of the laminating drums 310, 320. Further, a suction region A2 where a negative pressure remains substantially constant to hold the separator material S or the cut-out separator 40 by suction is formed on the outer peripheral surface 311 at a position corresponding to the second negative pressure chamber 332. The suction region A2 has a strong suction force and thus can hold the separator material S or the cut-out separator 40 by the suction force and rotate the separator material S or the cut-out separator 40 along the direction of rotation of the laminating drums 310, 320. The suction force of the sliding region A1 may also be set nearly equal to that of the suction region A2 to rotate the separator 40. Further, the sliding region A1 may be reduced in suction force to effect sliding movement of the separator material S on the outer peripheral surface 311 without the separator material S being rotated during the rotation of each of the laminating drums 310, 320, while holding the separator material S to such an extent that the separator material S does not get clear of the outer peripheral surface 311.

Also, the inside structure unit 330 is provided with neither of the first negative pressure chamber 331 and the second negative pressure chamber 332 in a range of from the position corresponding to the gap 340 to the position corresponding to the delivery roller unit 360 in the direction of rotation of the laminating drums 310, 320. Thus, a non-suction region A3 where a negative pressure does not develop and hence the separator 40 is not attached by suction is non-rotatably formed on the outer peripheral surface 311 in a part corresponding to the above-mentioned range.

Then, the rotating conveyance section 300 conveys the separators 40 by the laminating drums 310, 320 adhering by suction to the separators 40 while cutting out the separators 40. Further, the rotating conveyance section 300 sequentially laminates the separators 40 to both surfaces of the positive electrode 22 from the downstream side in the conveyance direction X, while synchronizing the speed of rotation of the laminating drums 310, 320 and the speed of conveyance of the positive electrode 22 by the electrode conveyance section 200. At this time, as illustrated in Fig. 10, the positive electrode 22 is introduced by the suction conveyance unit 220 in a direction T tangential to the cylindrically-shaped laminating drums 310, 320.

The welding section 400 welds together the separators 40 laminated to both surfaces of the positive electrode 22, as illustrated in Fig. 3. As illustrated in Fig. 10, the welding section 400 includes a pair of upper and lower welding machines 410, 420 on both ends in the direction of the axis of rotation of the laminating drums 310, 320.

The upper and lower welding machines 410, 420 are provided with plural projections 411, 421, respectively, which are disposed along the conveyance direction X on surfaces of the welding machines 410, 420 facing each other. Then, the separators 40 can be welded together by being heated while being pressed together by the projections 411, 421 facing each other.

The welding machines 410, 420 are movable in the conveyance direction X and the vertical direction Z. Specifically, the welding machines 410, 420 approach each other, while moving in the conveyance direction X at the same speed as that of the separators 40 in such a way as to synchronize to the separators 40 and the positive electrode 22 conveyed to the gap 340 and laminated together. Then, the joining parts 42 are formed by the facing projections 411, 421 joining the laminated separators 40 together. After that, when the positive electrode 22 packed in a bag with the separators 40 is conveyed to a predetermined position, the welding machines 410, 420 move away from each other and move upstream in the conveyance direction. Then, the welding machines 410, 420 are again brought into close proximity with each other while being moved in the conveyance direction X at the same speed as that of the separators 40, thereby welding other joining parts 42. After the joining of all joining parts 42, the welding machines 410, 420 move away from each other to release the fabricated packaged positive electrode 20.

Incidentally, the joining together of the separators 40 is not limited to using the above-mentioned structure. Specifically, for example, the separators 40 may be welded together while being heated between a pair of rotating heated rollers, or may be pressure-adhered only by pressing without heating, or an adhesive may also be used for the joining.

As illustrated in Fig. 6, the control device 500 performs centralized control on the positive electrode cutting section 100, the image capture camera 230, the pressing units 240, the conveyor 210, the suction conveyance unit 220, the introduction/support unit 250, the delivery roller units 360, the laminating drums 310, 320, the cutting units 350, the cutoff piece suction units 370, the negative pressure supply device 333, and the welding section 400, which are all taken collectively as an integral unit. Also, the control device 500 enables the parts of Fig. 6 to operate in synchronization with one another. Incidentally, the control device 500 may also perform centralized control inclusive of other devices for cell fabrication.

Next, description will be given with reference to Figs. 11 to 19 with regard to a producing method using the producing device.

First, the positive electrode cutting section 100 forms the positive electrode 22 by cutting the sheet material D for positive electrode wound in the form of a roll. The cut-out positive electrode 22 is placed on the placement surface 215 of the conveyor 210 by a suction pad or a conveyor or the like (unillustrated). Also, the delivery roller units 360 each restrain the separator material S by pinching a continuous sheet of the separator material S conveyed from the separator roll in the gap. As illustrated in Fig. 11, therefore, the extreme end of the separator material S is located in the uppermost portion or lowermost portion of the rotating conveyance section 300. Then, a negative pressure is set low in the first negative pressure chambers 331, and the laminating drums 310, 320 rotate while sliding on inner surfaces of the separator materials S without the separator materials S being pulled out in the sliding regions A1 on the outer peripheral surfaces 311. Incidentally, in the embodiment, two separators 40 are cut out each time the laminating drums 310, 320 make one rotation, and thus, as illustrated by the dash-double dot lines in Fig. 11, the separators 40 cut out earlier are already conveyed while being attached by suction to the outer peripheral surfaces 311 of the laminating drums 310, 320.

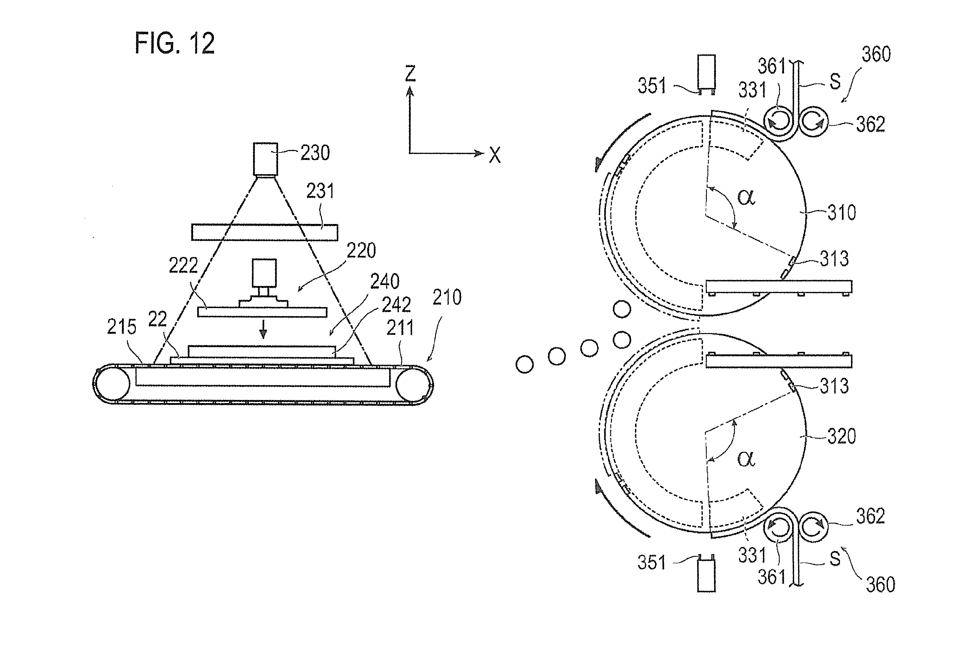

As illustrated in Fig. 11, the conveyor 210 on which the positive electrode 22 is placed conveys the positive electrode 22 on the placement surface 215 of the suction belt 211, with the positive electrode 22 arranged longitudinally in a line in the conveyance direction X (or arranged so that the tab is located on the upstream side in the conveyance direction X). At this time, the positive electrode 22 is attached by suction to the suction belt 211, and thus, the occurrence of turning up or the like is suppressed. Incidentally, the positive electrode 22 may be conveyed with itself arranged laterally (or arranged so that the tab is located in the width direction Y). When the suction belt 211 moves to a predetermined position, the suction belt 211 stops moving with the positive electrode 22 remaining attached by suction to the suction belt 211. Then, as illustrated in Fig. 12, the pressing units 240 operate so that the clampers 242 press the parts of long dimension along the two side edges H2, H4, respectively, of the positive electrode 22 (see Figs. 8 and 9). Thereby, deformation of the positive electrode 22, such as curling up, is corrected. Then, a portion of the positive electrode 22 floating from the suction belt 211 gets closer to the suction belt 211, and thus, the positive electrode 22 is sucked by the suction belt 211 thereby to adhere tightly on the placement surface 215.

In this position of the positive electrode 22, the image capture camera 230 captures an image of the four side edges H1 to H4 of the positive electrode 22, and transmits a predetermined signal to the control device 500. The control device 500 calculates the coordinates of the electrode center point O and the angle θ of inclination from the received signal by the method previously mentioned, and calculates the amount of correction of the position and inclination of the positive electrode 22 with respect to its normal position. Incidentally, at the time of image capture, the clampers 242 press the positive electrode 22 at the position inward of the edges of the four side edges H1 to H4 of the positive electrode 22 (or at the position toward the center of the positive electrode 22), and thus, the image capture camera 230 can capture the image of the four side edges H1 to H4 with reliability. Also, the clampers 242 are made of a transparent material, and thus, even if the clampers 242 lie in a range of image capture, the positive electrode 22 can be seen through the clampers 242 so that the image of the positive electrode 22 can be captured.

Then, the suction head 222 is pressed against an upper surface of the positive electrode 22 by moving down the suction head 222 of the suction conveyance unit 220 located above the suction belt 211. Thereby, the positive electrode 22 is attached by suction to the suction head 222. Incidentally, the positive electrode 22 is also attached by suction to the suction belt 211. However, the suction force of the suction head 222 may be set higher than that of the suction belt 211 or the suction belt 211 may temporarily stop sucking so that the positive electrode 22 can be separated from the suction belt 211 by the suction head 222.

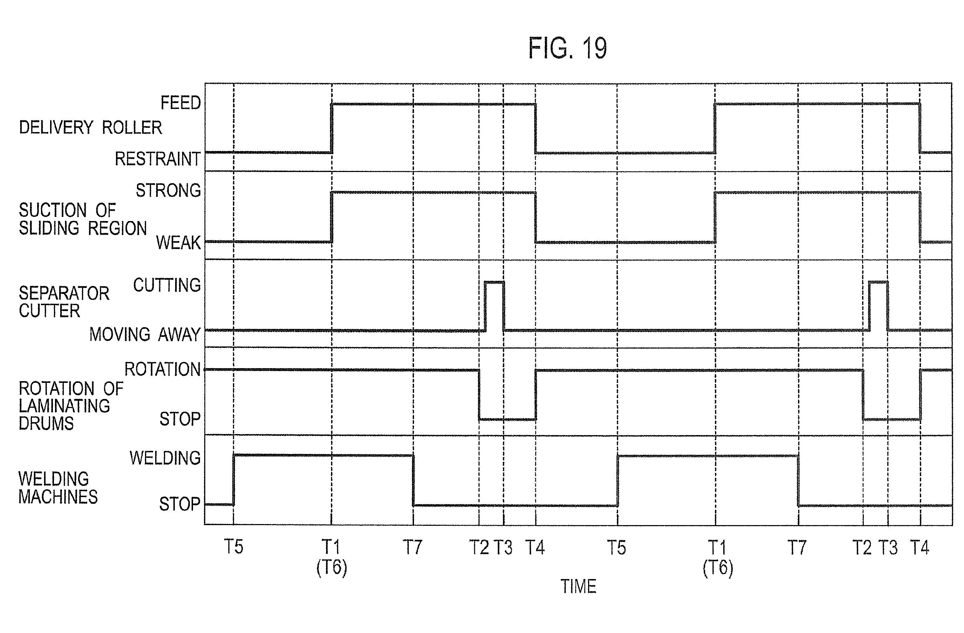

Then, the laminating drums 310, 320 each rotate, and the recess portions 313 move toward the position corresponding to the separator cutter 351. At this time, when the recess portions 313 move to a position at a predetermined angle α with respect to the position of the separator cutter 351, the control device 500 increases a negative pressure in the first negative pressure chamber 331 to strengthen the suction force of the sliding region A1. Further, the delivery roller unit 360 is rotated to sequentially deliver the separator material S while pinching the separator material S between the pair of delivery rollers 361, 362. Thereby, the feeding of the separator material S to the laminating drums 310, 320 is started (see T1 in Fig. 19). Then, the separator material S is attached by suction to the outer peripheral surface 311 of each of the laminating drums 310, 320 in the sliding region A1 having the increased negative pressure and the suction region A2, and the separator material S is sequentially pulled out as the laminating drums 310, 320 each rotate. Incidentally, the predetermined angle α is an angle corresponding to the length of a sheet of the separator 40 cut out.

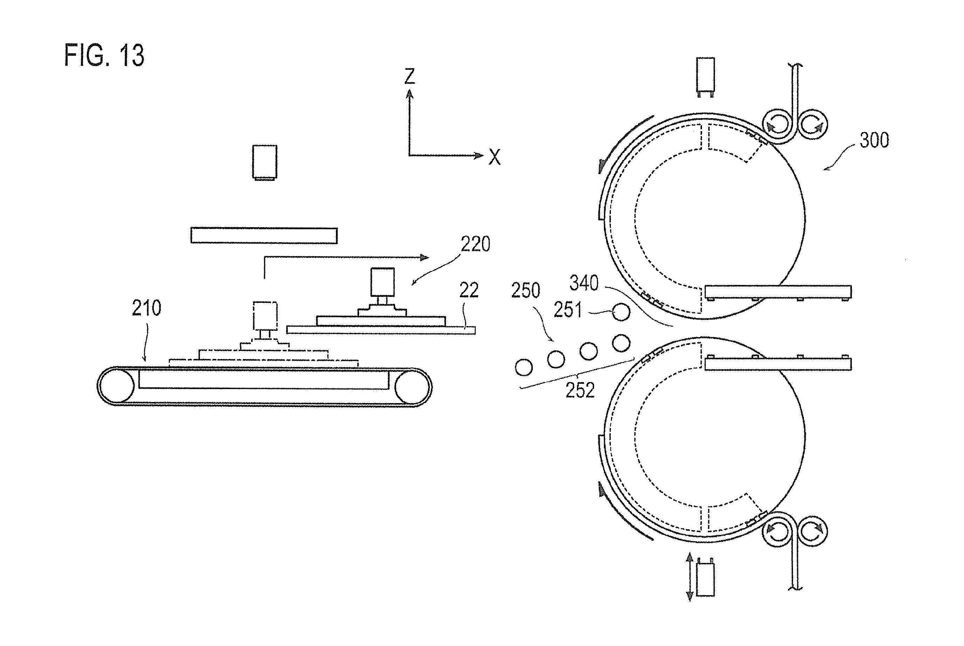

After this, as illustrated in Fig. 13, the suction conveyance unit 220 moves up while maintaining the positive electrode 22 substantially in a horizontal position, and then moves in the conveyance direction X to convey the positive electrode 22 to the gap 340 in the rotating conveyance section 300. At this time, the suction conveyance unit 220 corrects the position and orientation of the positive electrode 22 by the control device 500 controlling the drive device for the suction conveyance unit 220. Specifically, the suction conveyance unit 220 corrects the position and orientation of the positive electrode 22 between the suction of the positive electrode 22 and the delivery of the positive electrode 22 to the rotating conveyance section 300. Thus, the position of the positive electrode 22 is kept with high accuracy at all times, which in turn improves the accuracy of laminating in a later process.

Then, as illustrated in Fig. 14, the positive electrode 22 conveyed by the suction conveyance unit 220 reaches the introduction/support unit 250 in the "open" position disposed upstream from the gap 340 in the rotating conveyance section 300. Then, the introduction/support unit 250 moves the upper introduction/support unit 251 down to pinch the extreme end of the positive electrode 22 between the upper introduction/support unit 251 and the lower introduction/support unit 252. Further, the introduction/support unit 250 moves the rollers of the lower introduction/support unit 252 up to a substantially horizontal or "closed" position to support the positive electrode 22 at its underside. After this, the positive electrode 22 is released from the suction head 222 of the suction conveyance unit 220, and the introduction/support unit 250 rotates to sequentially deliver the positive electrode 22 into the gap 340 in the rotating conveyance section 300.

Also, in the rotating conveyance section 300, when the laminating drums 310, 320 rotate by the angle α after the start of rotation, the laminating drums 310, 320 stop rotating (see T2 in Fig. 19). At this time, the separator material S is pulled out onto each of the laminating drums 310, 320 by the angle α corresponding to a sheet of the separator 40. Further, the recess portions 313 are located facing the separator cutter 351 of the cutting unit 350. Then, under a command from the control device 500, the separator cutter 351 is pressed against the separator material S to cut the separator material S into a predetermined shape and thereby cut out the separator 40. The cut-out separator 40 is located in the suction region A2 of each of the laminating drums 310, 320 illustrated in Fig. 11, and is thus held by suction on each of the laminating drums 310, 320.

Then, the separator cutter 351 exits and is withdrawn from the recess portions 313 after cutting the separator material S. At the time at which the separator cutter 351 is withdrawn (see T3 in Fig. 19), as illustrated in Fig. 15, under a command from the control device 500, the suction head 371 for cutter moves into close proximity to the residual cutoff piece S' to hold the residual cutoff piece S' by suction and then returns to its original position. After this, the suction head 371 for cutter stops sucking to release its hold on the cutoff piece S', and the cutoff piece S' is collected by being sucked in through the suction opening 372 illustrated in Fig. 10.

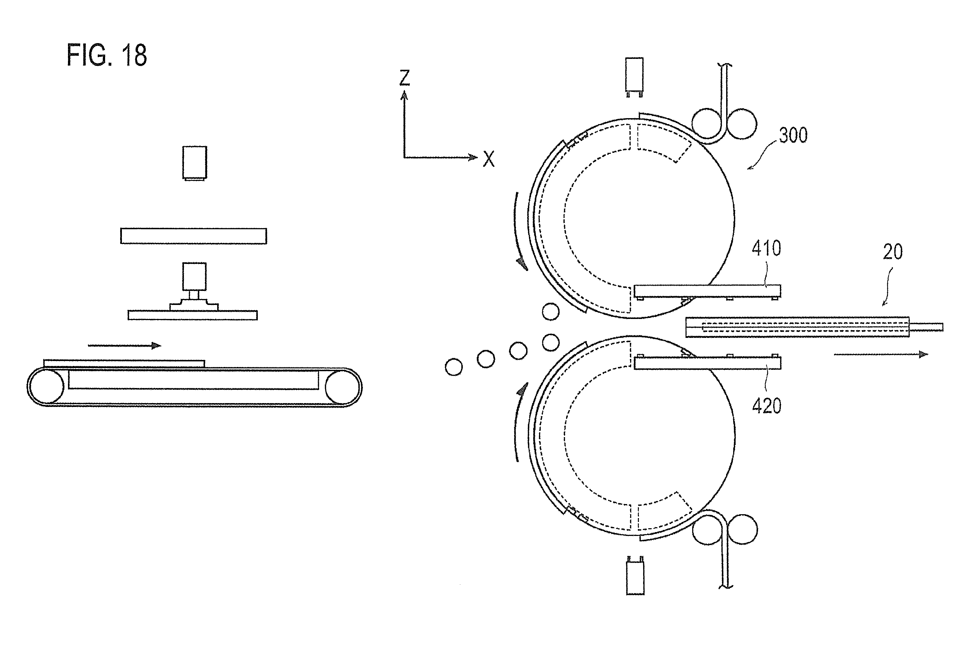

Then, the positive electrode 22 is released from the suction head 222 of the suction conveyance unit 220, and thereafter, the introduction/support unit 250 rotates to sequentially deliver the positive electrode 22 into the gap 340 between the laminating drums 310, 320. Further, the laminating drums 310, 320 are rotated again (see T4 in Fig. 19) and are rotated with the cut-out separators 40 attached by suction thereto to convey the separators 40 to the gap 340. Incidentally, when the laminating drums 310, 320 are rotated again, the control device 500 reduces a negative pressure in the first negative pressure chambers 331 to weaken the suction force of the sliding regions A1, and also, the delivery roller units 360 restrain the separator materials S (see Fig. 18). Thereby, the laminating drums 310, 320 rotate while sliding on the inner surfaces of the separator materials S without the separators 40 being pulled out in the sliding regions A1 on the outer peripheral surfaces 311.

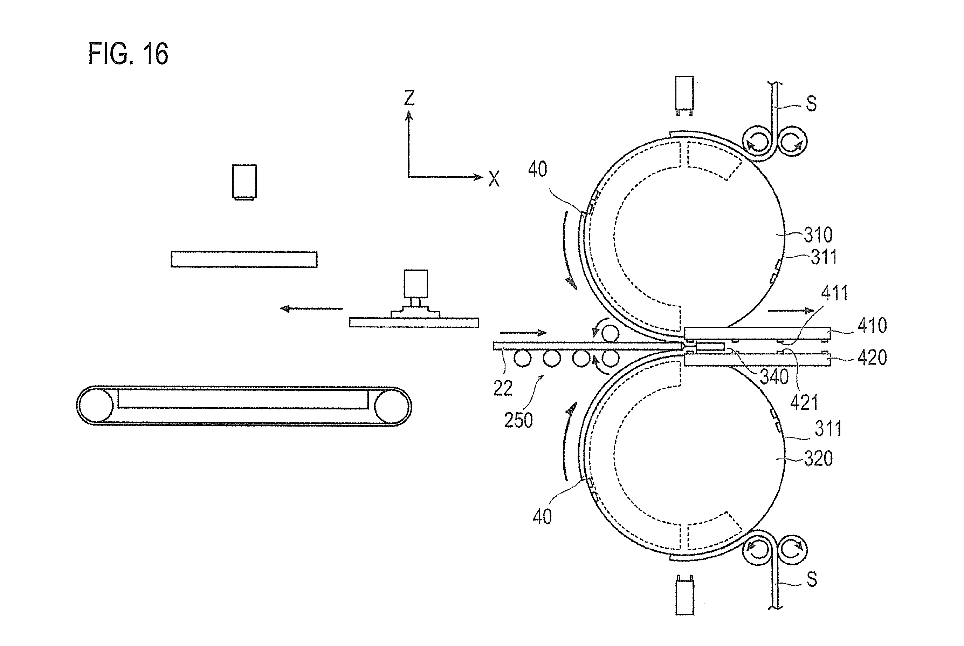

When the extreme ends of the separators 40 reach the gap 340 in the rotating conveyance section 300, as illustrated in Fig. 16, the two separators 40 are first laminated to each other, and then the separators 40 are laminated to both surfaces of the extreme end of the positive electrode 22. At this time, the separators 40 and the positive electrode 22 have the same speed. Further, the control device 500 controls conveyance positions (or the timing of conveyance) and conveyance speeds of the rotating conveyance section 300 and the suction conveyance unit 220 so that the separators 40 and the positive electrode 22 are laid one on top of another at a preset proper position.

Then, under a command from the control device 500, the pair of welding machines 410, 420 move in the conveyance direction X while moving into close proximity to each other, and pinch the separators 40 in between with only the extreme ends of both edges of the separators 40 pinched in between. Then, the separators 40 and the positive electrode 22, while being moved in the conveyance direction X, are welded together by the projections 411, 421 (see T5 in Fig. 19). The separators 40 move through the gap 340 and then to the non-suction regions A3 of the laminating drums 310, 320. Thus, the separators 40 move away from the outer peripheral surfaces 311 of the laminating drums 310, 320 without being subjected to a suction force, and are sequentially conveyed in the conveyance direction X with the positive electrode 22 sandwiched in between. Then, the separators 40 are already joined together at their extreme ends, and thus, the separators 40 are not separated from each other even when the separators 40 move away from the outer peripheral surfaces 311 of the laminating drums 310, 320.

Also after this, the introduction/support unit 250 conveys the positive electrode 22 substantially in a horizontal position in the conveyance direction X in synchronization with the laminating drums 310, 320. Then, the separators 40 attached by suction to the outer peripheral surfaces 311 of the laminating drums 310, 320 are sequentially laminated to both surfaces of the positive electrode 22 as the laminating drums 310, 320 rotate. Incidentally, at this time, in order to cut out the next separator 40, the suction force of the sliding region A1 is strengthened again, and the feeding of the separator material S by the delivery roller unit 360 is started (see T6 in Fig. 19).

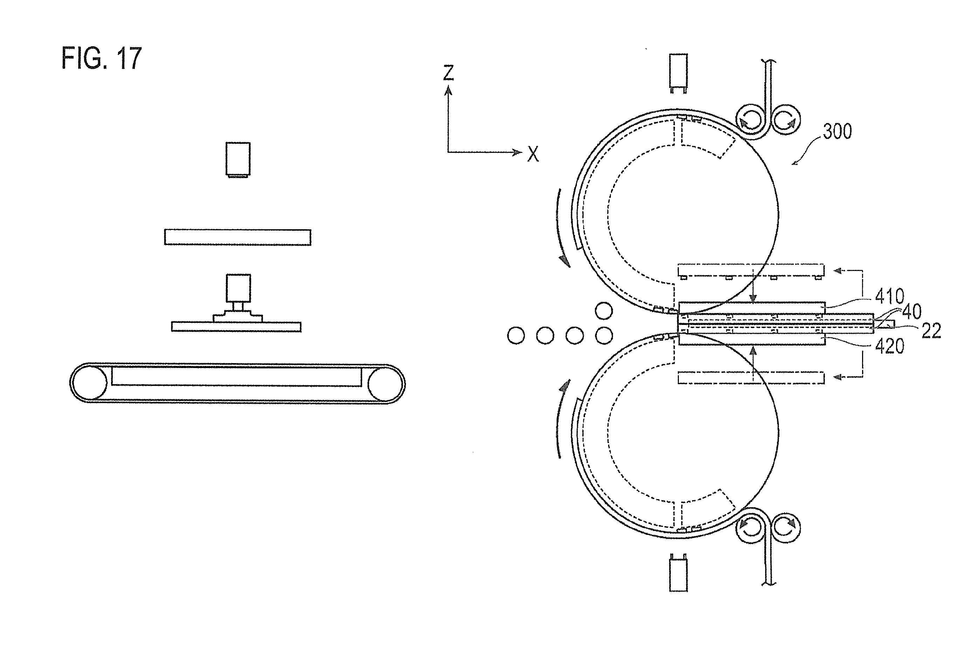

Then, the positive electrode 22 is conveyed to a predetermined position with the separators 40 laminated to both surfaces of the positive electrode 22, and thereafter, the pair of welding machines 410, 420 are moved away from each other and are moved upstream in the conveyance direction. After that, as illustrated in Fig. 17, the welding machines 410, 420 are again brought into close proximity with each other while being moved in the conveyance direction X, thereby to weld other joining parts 42. After the joining of all joining parts 42 on both edges of the separators 40, as illustrated in Fig. 18, the welding machines 410, 420 move away from each other to release the fabricated packaged positive electrode 20 (see T7 in Fig. 19). After this, other welding machines (unillustrated) join also the joining parts 42 of the sides 44B of the separators 40, thereby forming the packaged positive electrode 20.

Then, the packaged positive electrodes 20 can be continuously fabricated by repeating the above-described process.

The fabricated packaged positive electrode 20 is conveyed to the next process, and the packaged positive electrode 20 is alternately stacked with the negative electrode 30 thereby to form the electric-power generation element 15, and finally, the lithium ion secondary cell 10 is manufactured.

In the embodiment, first, a pair of separators are simultaneously laminated to both surfaces of the positive electrode 22 while the positive electrode 22 is conveyed. Then, in this laminated position, the separators are joined edge to edge together, and thereby, the positive electrode 22 is packaged with the separators. Therefore, the packaged positive electrode 20 can be fabricated at high speed, and thus, a production time for a cell can be reduced. Incidentally, the separators as employed herein may include not only the separator 40 having a predetermined shape, but also the separator material S.

Also, the control device 500 (or the synchronization device) synchronizes the conveyance positions (or the timing of conveyance) and the conveyance speeds of the laminating drums 310, 320 and the electrode conveyance section 200 so that the separators 40 and the positive electrode 22 are laid one on top of another at a predetermined position. Thereby, the positive electrode 22 and the separators 40, while being moved together, are laminated in sequence from the downstream side in the conveyance direction X, and thus, the packaged positive electrode 20 can be produced with high accuracy at high speed.

Incidentally, it is to be understood that the present invention is not limited to the above-mentioned embodiment, and various modifications could be made thereto.

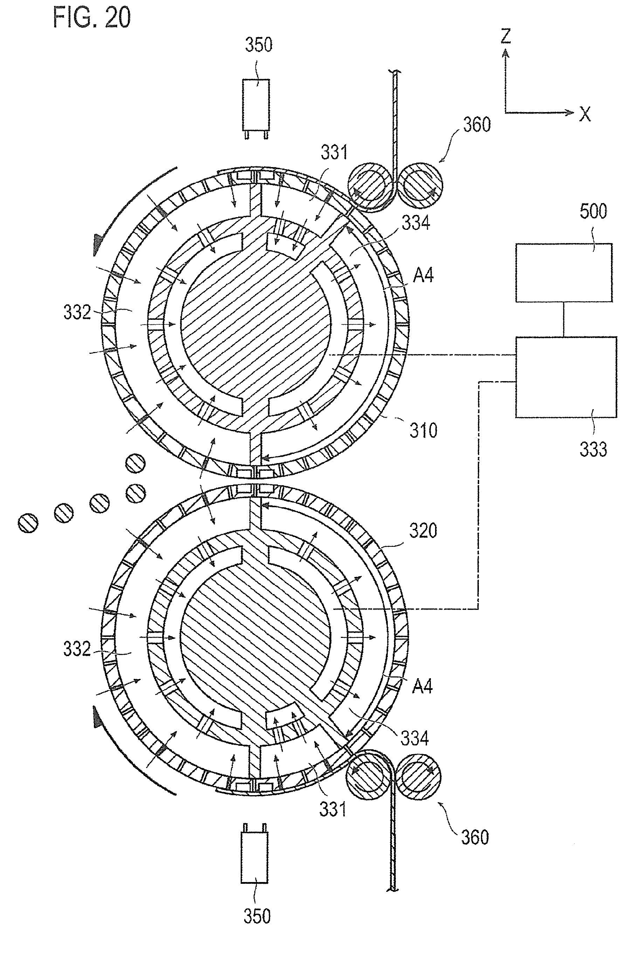

Fig. 20 illustrates a modification of the device for producing the packaged electrode according to the embodiment. The device may be configured as given below. Specifically, as illustrated in Fig. 20, the laminating drums 310, 320 are each internally provided with a pressurized chamber 334 having a higher pressure than atmospheric pressure, which serves as a non-suction region A4 of each of the laminating drums 310, 320, and gas (or fluid) is blown off through the vent holes 312. Such a configuration enables separating the separators 40 from the laminating drums 310, 320 with the lowest possible load being applied on the separators 40, at the desired time at which the separators 40 are separated from the laminating drums 310, 320.

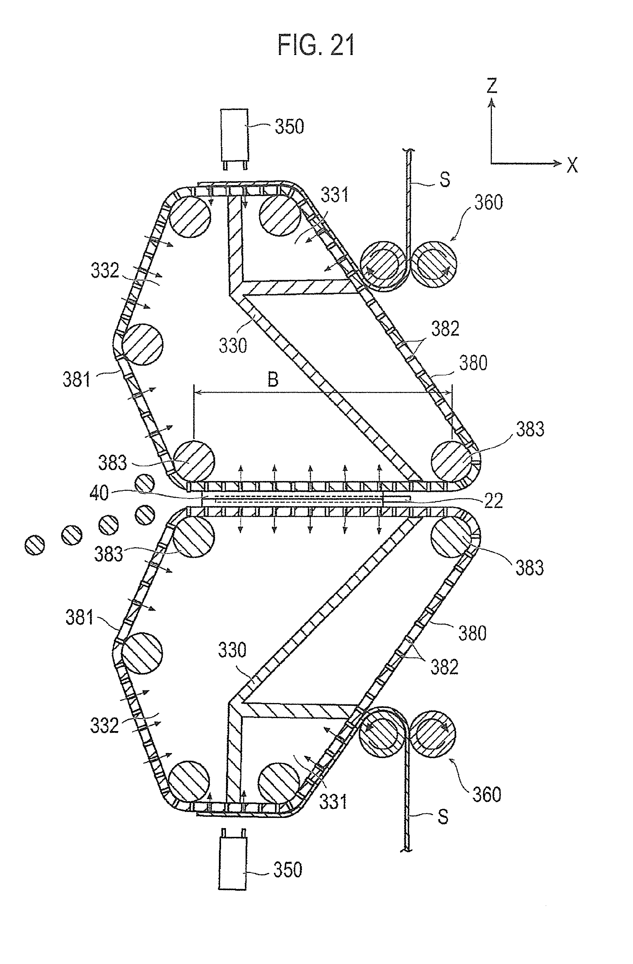

Also, Fig. 21 illustrates another modification of the device for producing the packaged electrode according to the embodiment. As illustrated in Fig. 21, each laminating drum may be configured in such a manner that the laminating drum is not cylindrical in shape and a flexibly bendable suction belt 380 having vent holes 382 is held by plural rotating rollers 383. By such a configuration, the laminating drum is not limited to being circular in cross section, and an outer peripheral surface 381 may have any given shape, which in turn improves design freedom. By such a configuration, in particular, a region B between the pair of suction belts 380 where the separators 40 and the positive electrode 22 are laminated can be set wide. Thus, the separators 40 and the positive electrode 22 can be pinched and held between the suction belts 380 until the completion of welding by the welding machines, and hence the accuracy of welding can be improved. Incidentally, in Figs. 20 and 21, the same reference numerals are used for parts having the same functions as those of the embodiment, and description of the parts will be omitted.

Also, in the above-described embodiment, a form in which the positive electrode 22 is packaged with the separators 40 has been described as the packaged positive electrode 20. However, the negative electrode 30 may be packaged by using the above-described device for producing the packaged electrode.

Also, in the above-described embodiment, description has been given with regard to a case where the positive electrode lead 11 and the negative electrode lead 12 are drawn out from one and the same end portion of the sheathing material 13, as illustrated in Fig. 1; however, the present invention is not so limited. The positive electrode lead 11 and the negative electrode lead 12 may be drawn out from opposite end portions, respectively, for example. In this case, for the formation of the electric-power generation element 15 of the lithium ion secondary cell 10, the negative electrode 30 and the packaged positive electrode 20 are laminated in such a manner that the positive electrode tab 23 and the negative electrode tab 33 are oriented in opposite directions.

Also, in the embodiment, the predetermined gap 340 is provided between the pair of upper and lower laminating drums 310, 320 in the rotating conveyance section 300. However, the laminating drums 310, 320 may be in contact with each other with no gap in between. In this case, it is preferable that either one part or both parts of the rotating conveyance section 300 have a structure following according to the thicknesses of the positive electrode 22 and the separator 40.

Also, although the electrode conveyance section 200 conveys the positive electrode 22 substantially in a horizontal position, the positive electrode 22 may be conveyed in other orientations.

Also, the pair of laminating drums 310, 320 are not vertically arranged but may be arranged in other directions.

Also, in the embodiment, the separator cutter 351 cuts out a continuous sheet of the separator material S into a predetermined shape with the separator material S attached by suction to the outer peripheral surface 311 of each of the laminating drums 310, 320. However, the separators 40 precut out into the predetermined shape may be conveyed while being fed to the laminating drums 310, 320 and attached by suction thereto.

Also, in the embodiment, the pair of laminating drums 310, 320 of symmetrical configuration are provided. However, the pair of laminating drums (or the separator conveyance section) may be of asymmetrical configuration; for example, a cylindrical laminating drum may be used as one of the pair, and a suction belt having any given shape may be used as the other.

Also, the laminating drums 310, 320 have the suction force, and thus, even one laminating drum functions sufficiently in a case where a configuration is such that one separator 40 is laminated to one surface of the positive electrode 22 (or the negative electrode 30).

Also, although the introduction/support unit 250 has been described as being wholly formed of the rollers, the introduction/support unit 250 may be constructed of other members such as a flat member.

Also, the cutting blade provided in the cutting unit 350 is not limited to the heat cutter but may be a physically sharp-edged cutting blade. Also, although the recess portions 313 are provided as the receiving portions, the receiving portions are not necessarily limited to the recess portions 313.

Also, the sliding and suction of the separator material S on the outer peripheral surface 311 are adjusted by regulating a negative pressure in the sliding region A1 of each of the laminating drums 310, 320. However, a negative pressure in the first negative pressure chamber 331 may be kept substantially constant, and a restraining force of the delivery roller unit 360 may be used alone to adjust the feeding and restraint of the separator material S. Incidentally, in this case, it is preferable that the suction force of the sliding region A1 be lower than the suction force of the suction region A2.

Also, a method for imparting the adhesion force to the laminating drums 310, 320 (or the separator conveyance section) is not limited to a method of adhesion using negative pressure; for example, static electricity may be used for the adhesion.

Also, in the embodiment, the control device 500 (or the synchronization device) synchronizes the positive electrode cutting section 100, the image capture camera 230, the pressing units 240, the conveyor 210, the suction conveyance unit 220, the introduction/support unit 250, the delivery roller units 360, the laminating drums 310, 320, the cutting units 350, the cutoff piece suction units 370, the negative pressure supply device 333, and the welding section 400. However, it is not necessarily required that all be electrically synchronized; for example, some of them may be mechanically linked for synchronization.

Also, in the embodiment, the joining parts 42 have been described as being formed by joining the separators 40 edge to edge together; however, the joining parts are not limited to the edges but may be parts other than the edges.

The entire contents of Japanese Patent Application Nos. 2011-085741 (filed on April 7, 2011) and 2012-067812 (filed on March 23, 2012) are incorporated herein by reference.

While the contents of the present invention have been described above with reference to the embodiment and examples, it is to be understood that the present invention is not limited to these descriptions, and it would be obvious to one of ordinary skill in the art that various modifications and improvements could be made thereto.

### INDUSTRIAL APPLICABILITY

According to the device for producing the packaged electrode and the method for producing the same of the present invention, while the electrode is conveyed, a pair of separators are also simultaneously laminated to both surfaces of the electrode. Then, in this laminated position, the separators are joined together, and thereby, the electrode is packaged with the separators. Therefore, the packaged electrode can be fabricated at high speed, and thus, a production time for a cell can be reduced.

### REFERENCE SIGNS LIST

- 10: secondary cell
- 20: packaged positive electrode
- 22: positive electrode
- 30: negative electrode
- 40: separator
- 42: joining part
- 200: electrode conveyance section
- 300: rotating conveyance section
- 310, 320: laminating drums (cylindrical rotating bodies)
- 311: outer peripheral surface
- 400: welding section (joining section)
- 500: control device (synchronization device)
- S: separator material (separator)

## Claims

1. A device for producing a packaged electrode comprising:
a pair of cylindrical rotating bodies arranged with their respective outer peripheral surfaces facing each other, and each configured to convey a separator by rotating while holding the separator on the outer peripheral surface;
an electrode conveyance section configured to convey an electrode having a predetermined shape in a direction tangential to the cylindrical rotating bodies toward a gap between the pair of cylindrical rotating bodies; and
a joining section configured to join the separators together, with the electrode sandwiched between the pair of separators conveyed by the pair of cylindrical rotating bodies,
wherein the electrode is packaged with the separators by simultaneously delivering and laminating the pair of separators from the rotating cylindrical rotating bodies to both surfaces of the electrode being conveyed by the electrode conveyance section, and joining together the pair of separators delivered to both surfaces of the electrode by means of the joining section.

2. The device for producing a packaged electrode according to claim 1, further comprising a synchronization device configured to synchronize conveyance positions and conveyance speeds of the cylindrical rotating bodies and the electrode conveyance section so that the separators and the electrode are laid one on top of another at a predetermined position, wherein the synchronization device laminates the electrode and the separators in sequence from a downstream side in a conveyance direction, while moving the electrode and the separators together.

3. A method for producing a packaged electrode comprising:
conveying separators by rotating cylindrical rotating bodies, respectively, while holding the separator on each of outer peripheral surfaces of the pair of cylindrical rotating bodies arranged with their respective outer peripheral surfaces facing each other;
conveying an electrode having a predetermined shape in a direction tangential to the cylindrical rotating bodies toward a gap between the pair of cylindrical rotating bodies;
simultaneously delivering and laminating the pair of separators from the rotating cylindrical rotating bodies to both surfaces of the electrode being conveyed to the gap between the pair of cylindrical rotating bodies; and
packaging the electrode with the separators by joining together the pair of separators delivered to both surfaces of the electrode.

4. The method for producing a packaged electrode according to claim 3, wherein the electrode is conveyed toward the gap between the pair of cylindrical rotating bodies by an electrode conveyance section, and conveyance positions and conveyance speeds of the cylindrical rotating bodies and the electrode conveyance section are synchronized so that the separators and the electrode are laid one on top of another at a predetermined position, whereby the electrode and the separators, while being moved together, are laminated in sequence from the downstream side in a conveyance direction.

## Amended claims

### Amended claims under Art. 19.1 PCT

**1.** Amended) A device for producing a packaged electrode comprising:
a pair of cylindrical rotating bodies arranged with their respective outer peripheral surfaces facing each other, and each configured to convey a separator cut into a predetermined shape by rotating while holding the separator on the outer peripheral surface;
an electrode conveyance section configured to convey an electrode having a predetermined shape in a direction tangential to the cylindrical rotating bodies toward a gap between the pair of cylindrical rotating bodies; and
a joining section configured to join the separators together, with the electrode sandwiched between the pair of separators conveyed by the pair of cylindrical rotating bodies,
wherein the electrode is packaged with the separators by simultaneously delivering and laminating the pair of separators from the rotating cylindrical rotating bodies to both surfaces of the electrode being conveyed by the electrode conveyance section, and joining together the pair of separators delivered to both surfaces of the electrode by means of the joining section.

**2.** The device for producing a packaged electrode according to claim 1, further comprising a synchronization device configured to synchronize conveyance positions and conveyance speeds of the cylindrical rotating bodies and the electrode conveyance section so that the separators and the electrode are laid one on top of another at a predetermined position, wherein the synchronization device laminates the electrode and the separators in sequence from a downstream side in a conveyance direction, while moving the electrode and the separators together.

**3.** Amended) A method for producing a packaged electrode comprising:
conveying separators cut into a predetermined shape by rotating cylindrical rotating bodies, respectively, while holding the separator on each of outer peripheral surfaces of the pair of cylindrical rotating bodies arranged with their respective outer peripheral surfaces facing each other;
conveying an electrode having a predetermined shape in a direction tangential to the cylindrical rotating bodies toward a gap between the pair of cylindrical rotating bodies;
simultaneously delivering and laminating the pair of separators from the rotating cylindrical rotating bodies to both surfaces of the electrode being conveyed to the gap between the pair of cylindrical rotating bodies; and
packaging the electrode with the separators by joining together the pair of separators delivered to both surfaces of the electrode.

**4.** The method for producing a packaged electrode according to claim 3, wherein the electrode is conveyed toward the gap between the pair of cylindrical rotating bodies by an electrode conveyance section, and conveyance positions and conveyance speeds of the cylindrical rotating bodies and the electrode conveyance section are synchronized so that the separators and the electrode are laid one on top of another at a predetermined position, whereby the electrode and the separators, while being moved together, are laminated in sequence from the downstream side in a conveyance direction.
